# EUROPÄISCHE PATENTSCHRIFT

(11) **EP 0 585 949 B1**
(45) Veröffentlichungstag und Bekanntmachung des Hinweises auf die Patenterteilung: **10.12.1997**
(21) Anmeldenummer: 93114173.3
(22) Anmeldetag: 03.09.1993
(51) Int. Cl.: C09J 4/00, C09J 5/00

(54) **Verfahren und Vorrichtung zum Verarbeiten und Auftragen von Cyanacrylat-Klebstoffen**
Process and device for the processing and application of cyanoacrylic adhesives
Procédé et dispositif pour le traitement et l'application d'adhesifs cyanoacryliques

(30) Priorität: 04.09.1992 DE 4229639; 13.10.1992 DE 4234529; 04.09.1992 DE 4229640; 13.10.1992 DE 4234530
(43) Veröffentlichungstag der Anmeldung: 09.03.1994
(73) Patentinhaber: Meinen, Tomas, D-82049 Pullach (DE)
(72) Erfinder: Meinen, Tomas, D-82049 Pullach (DE)
(74) Vertreter: Bohnenberger, Johannes, Dr.

(56) Entgegenhaltungen:
- WO-A-86/06738
- FR-A- 2 121 825
- DATABASE WPI Week 8344, Derwent Publications Ltd., London, GB; AN 83-804347 & JP-A-58 160 291 (TAOKA CHEMICAL) 22. September 1983

## Beschreibung

Die Erfindung betrifft ein Verfahren und eine Vorrichtung zum Verarbeiten und Auftragen von Cyanacrylat-Klebstoffen.

Cyanacrylat-Klebstoffe bestehen aus Methyl-, Ethyl- und Butylestern der Cyanacrylsäure, wobei man zur Viskositätseinstellung zusätzlich lösliche und verträgliche Polymere zugibt. Meist reicht zur Polymerisation dieser Klebstoffe die Luftfeuchtigkeit bzw. die Oberflächenfeuchtigkeit auf dem Substrat aus, auf dem der Klebstoff angewendet wird. Die Polymerisationsreaktion verläuft sehr schnell, so daß diese Klebstoffe im allgemeinen auch als "Sekundenkleber" bezeichnet werden.

Die schnelle Reaktion mit Wasser bzw. mit der Luftfeuchtigkeit, die - wenn man keine besonderen Vorkehrungen trifft - überall anzutreffen ist, bringt es aber mit sich, daß in der Serienproduktion Schwierigkeiten auftreten. Insbesondere sind die Standzeiten der verwendeten Auftragskanülen relativ niedrig bzw. nicht vorhersehbar. Bereits geringe Kontaminationen der Kanülen können zu abrupten Polymerisationsaktionen führen, so daß die Kanülen dann nicht mehr verwendbar sind.

Bei automatisierten Dispensersystemen, die im allgemeinen ein Ventil zum Dosieren des abzugebenden Cyanacrylat-Klebstoffs (CA-Klebstoffs) benötigen, können durch Polymerisationseffekte Störungen auftreten. Es ist also insgesamt häufig problematisch, Cyanacrylat-Klebstoffe mit anderen Materialien in Verbindung zu bringen.

Aus der DE-A-41 09 105 ist es bekannt, daß CA-Klebstoffe stabilisiert werden können, indem sie mittels eines Dosierungsformteils aus säurehaltigem Kunststoff aufgetragen werden. Immer dann aber, wenn man keine Kunststoffteile, insbesondere solche aus einem säurehaltigen Kunststoff verwenden kann, läßt sich dieses Verfahren nicht anwenden. Insbesondere gilt dies beispielsweise für dünne Auftragskanülen, die - wenn sie aus Kunststoff gefertigt sind - keine hinreichende mechanische Stabilität gegenüber schnellen Bewegungen haben und nur sehr schwierig bei dünnen Durchmessern reproduzierbar gefertigt werden können.

Weiterhin ist es aus der DE-A-30 44 383 oder der DE-A-31 40 246 bekannt, daß man CA-Klebstoffe durch Säurezugabe vor anionischer Polymerisation schützen kann. Außerdem ist es aus der DE-A-17 94 091 bekannt, daß man einem Lagerungsbehälter für CA-Klebstoffe einen Polymerisationsinhibitor zugeben kann. Die oben beschriebene Problematik wird hierdurch aber nicht gelöst.

Ein weiterer, für die Anwender von CA-Klebstoffen unangenehmer Begleiteffekt dieser Klebstoffe besteht darin, daß in der Umgebung von frisch aufgetragenem Klebstoff, also im Endeffekt in der Umgebung von Klebestellen, ein milchig weißer stumpfer Niederschlag gebildet wird. Dieser muß nach Ende des Verklebungsvorgangs mühsam entfernt werden.

Zur Verdeutlichung der Problematik sei hier beispielhaft der typische Reaktionsmechanismus von CA beim Austritt aus Kapillaren dargestellt. Beim Auftrag von Klebstoff mittels einer Kanüle formt sich der austretende Klebstoff zu einem Tropfen. Der sich bildende Tropfen hat die Tendenz, die Kanülenspitze zu umschließen und steigt an der Kanüle bis zum Kräftegleichgewicht auf, wobei die Schwerkraft, die Oberflächenspannung, Kohäsionskräfte und eine einsetzende Polymerisation die hier entscheidenden Parameter sind. Bei weiterer Klebstoff-Förderung kommt es schließlich zum Ablösen eines Tropfens.

Wird im Moment des Ablösens die Klebstoffzufuhr unterbrochen, so daß sich kein Klebstoff erneut an der Außenwand der Kanüle hochziehen kann, so ist ein dünner Ring aus polymerisiertem Klebstoff zu erkennen, der die Kanüle an der Fließgrenze umschließt. Bei wiederholter Verwendung einer Kanüle zieht nun jeder weitere Klebstofftropfen bis zu diesem Ring hoch und sorgt auf diese Weise für ein langsames Wachstum polymerisierten Cyanacrylats entlang dieser Fließgrenze. Dadurch ändern die Kanülen im Laufe ihrer Benutzung ihre mechanischen Dimensionen in dem hier interessierenden Bereich, so daß sich auch das Auftragsverhalten (Menge des abgegebenen Klebstoffs bzw. Größe des Klebstoffpunktes) im Laufe der Zeit ändert.

Schließlich ist es auch bekannt, daß eine Reihe von Materialien, insbesondere Glas, bei Benetzung mit einem CA-Klebstoff diesen zu abrupter Polymerisation bringen können. Damit konnte Glas bisher nicht als Werkstoff für die Konstruktion von CA führenden Komponenten eingesetzt werden. Aufgrund der Spontanpolymerisation ist CA in der Regel auch nicht für die Verklebung von Glasoberflächen geeignet, weil sich z. B. unmittelbar nach dem Auftragen ein Ring aus polymerisiertem Produkt bildet, der wiederum einen ungewünscht großen Spalt zwischen aufeinanderzuklebenden Teilen erzeugt. Auf diesen Stoffen, insbesondere auf Glas, ist somit die Verwendung von CA-Klebstoffen praktisch nicht möglich.

Der Erfindung liegt die Aufgabe zugrunde, ein Verfahren zum Verarbeiten und Auftragen von CA-Klebstoffen aufzuzeigen, das eine kostengünstige und auf Dauer sichere Verarbeitung des Klebstoffs und somit reproduzierbar genaue und feste Klebestellen sicherstellt. Weiterhin ist es Aufgabe der Erfindung, eine Vorrichtung aufzuzeigen, mit der in einfacher Weise präzise und feste Verklebungen erzielbar sind.

Diese Aufgabe wird durch die in den Patentansprüchen 1 bzw. 14 angegebenen Merkmale gelöst.

Überraschenderweise hat es sich gezeigt, daß beispielsweise Kanülen oder Kapillaren, die durch das erfindungsgemäße Verfahren passiviert wurden, erheblich längere Standzeiten haben als unpassivierte Kanülen. An den erfindungsgemäß behandelten Kanülen treten nur in erheblich verringertem Maß, wenn überhaupt, Polymerisationsprodukte auf, siehe z. B. Erscheinungen an der Fließgrenze. Auch der sich sonst auf den Kanülen bildende Niederschlag ist nicht zu beobachten.

Besonders wichtig ist hierbei der Umstand, daß auch Stahlkanülen verwendbar sind, die bisher als nicht geeignet zur Verwendung mit CA-Klebstoffen eingestuft wurden. Gleiches gilt auch für Ventile oder andere Bauteile, die mit dem CA-Klebstoff in Verbindung gelangen. Durch eine entsprechende Passivierung dieser Bauteile können sie nunmehr mit praktisch unbegrenzter Standzeit verwendet werden.

Bei Anwendung des erfindungsgemäßen Verfahrens auf die Umgebung der miteinander zu verklebenden Gegenstände bzw. deren Oberflächen wird jeglicher Niederschlag vermieden. Man kann hierbei eine gegebenenfalls notwendige Oberflächenreinigung gleichzeitig mit der erfindungsgemäßen Passivierung durchführen.

Wenn man den CA-Klebstoff mittels einer Kanüle wiederholt aufträgt, so bewahrt man die Kanüle mindestens mit ihrem spitzennahen Ende (das vom hochsteigenden Klebstoff benetzt wird) während zwangsläufiger Arbeitspausen im angesäuerten Lösungsmittel auf. Besonders vorteilhaft ist es bei wiederholtem Klebstoffauftrag mittels ein und derselben Kanüle, wenn man die Intervalle zwischen den Arbeitspausen, also die eigentlichen Arbeitszeiten derart wählt, daß die Kanüle während der eigentlichen Benutzung im wesentlichen feucht durch das angesäuerte Lösungsmittel bleibt. Dies ist insbesondere dann leicht zu gewährleisten, wenn man ein wenig flüchtiges Lösungsmittel, wie beispielsweise Ethylcyanacetat, z. B.CEM von der Fa. Sichel, verwendet.

Wenn das Lösungsmittel eher störend ist, wie beispielsweise bei der Vorbehandlung von zu beklebenden Flächen, so verwendet man ein (flüchtiges) Lösungsmittel, insbesondere Aceton.

Bei Verwendung von Aceton genügen drei, vier Tropfen Phosphorsäure auf etwa 100 ml Aceton. Insgesamt hat es sich überraschenderweise gezeigt, daß bereits sehr geringe Mengen einer Säure, insbesondere Phosphorsäure, in einem Lösungsmittel genügen. Ein Mengenverhältnis von ca. 1/10⁻⁷ (Lösungsmittel/Säure) ergibt bereits eine merkliche Passivierung. Vorzugsweise wird ein Mengenverhältnis des Lösungsmittels zur Säure von 1/10⁻³ bis 1/10⁻¹ verwendet. Es ist aber auch möglich, zur Passivierung eine im wesentlichen reine Säure zu verwenden. So haben Versuche gezeigt, daß handelsübliche Phosphorsäure (85 %) durchaus zur Passsivierung verwendbar ist.

Man kann das angesäuerte Lösungsmittel (mit im wesentlichen minimalem Säuregehalt) so herstellen, daß man in das Lösungsmittel CA-Klebstoff eintropft und die Tropfen beobachtet. Gleichzeitig gibt man die verwendete Säure (tropfenweise) zu. Solange das Lösungsmittel noch nicht genügend angesäuert ist, verändern die Tropfen ihre Konsistenz beim Absinken im Lösungsmittel. Sie werden Gel-artig. Sobald diese Veränderung nicht mehr zu beobachten ist, unterbricht man die Säurezugabe, so daß man dann eine minimale Säuremenge im Lösungsmittel hat. Immer dann, wenn das Kontaminationsrisiko gering gehalten werden soll, wird man die Säurezugabe so gering wie möglich halten. Vorzugsweise wird ein im wesentlichen wasserfreies Lösungsmittel verwendet.

Ein hier besonders bevorzugter Anwendungsbereich liegt in der Herstellung von IC-Karten, bei der ein Mikrochip-Modul in eine Kunststoffkarte eingeklebt wird. Hierbei müssen die Klebestellen sehr klein sein. Die Verklebung muß sehr schnell ihre Endfestigkeit erreichen, wenn man die allgemein geforderten hohen Herstellungstakt-Raten erzielen will. CA-Klebstoffe sind somit sehr vorteilhaft, jedoch konnten die durch die eingangs genannte Problematik verursachten Schwierigkeiten bislang nicht überwunden werden.

Der Verklebungsvorgang muß nicht nur sehr genau erfolgen, es muß auch gewährleistet sein, daß die Klebeschichten sehr dünn sind und an die Stellen, an denen keine Kontaktverklebung stattfinden soll, kein Klebstoff gelangt. Insbesondere ist dies der Bereich, in dem sich das Halbleiterbauteil befindet. Dorthin gelangender Klebstoff kann chemische Reaktionen am Bauteil oder an der Karte auslösen, da hierfür eine hinreichend lange Reaktionszeit verbleibt und der eingequollene Klebstoff nicht genügend Oberflächenfeuchtigkeit zur sofortigen Polymerisationsreaktion vorfindet.

Weiterhin treten dann, wenn der Chip mit der Karte verklebt ist, beim Biegen der Karte keine Zugspannungen zwischen den Kontaktflächen und dem Halbleiterbauteil auf, was zu Schäden führen könnte. Über die Außenränder des Moduls hervorquellender Klebstoff führt zu Verunreinigungen der Kartenoberfläche ebenso wie der eingangs beschriebene Niederschlag.

Bei Verwendung des erfindungsgemäßen Verfahrens kann man nun besonders kleine und dennoch exakt geformte und vor allem reproduzierbar definierte Klebestellen bilden.

Genauer gesagt, Kapillaren und andere Klebstoff führende Teile bzw. Oberflächen, die nicht verklebt werden dürfen, werden passiviert, um jede Polymerisationsreaktion von CA an diesen Oberflächen auszuschließen. Zu verklebende Oberflächen werden nicht passiviert, da sonst unter Umständen keine Verklebung an dem Chip-Modul, der Klebefläche der Karte oder dergleichen mehr möglich ist.

Zu verklebende Glasflächen oder Flächen von ähnlichen Materialien, bei denen Schockaushärtung auftreten kann, können ggf. leicht sauer vorbehandelt werden, um den Reaktionsablauf von CA zu verzögern und dadurch die schädliche Schockaushärtung an solchen Oberflächen zu verhindern.

Die Umgebung von Klebestellen kann zweckmäßigerweise mit einem angesäuerten Lösungsmittel gereinigt und damit passiviert werden, um den durch an der Klebestelle austretende Monumere verursachten Niederschlag zu vermeiden.

Die Bestimmung der Menge des für jeden Kleberpunkt aus der Kanüle aufzubringenden Klebstoffs erreicht man vorzugsweise über eine Einstellung des Drucks und der Zeitdauer, mit welcher der Kanüle Klebstoff zugeführt wird, und zwar unter Einbeziehung der Höhe des Kanülenendes über der Auftragsfläche. Dadurch wird definiert, wann der aus der Kanüle austretende Tropfen die Auftragsfläche berührt. Bei Berührung der Auftragsfläche kommt es zu einem Auseinanderfließen des Tropfens auf der Auftragsfläche und gleichzeitig zu einem Ablösen des Tropfens von der Kanüle. Durch Einbeziehung der Höhe des Kanülenendes über der Auftragsfläche kann somit eine besonders geringe Klebstoffmenge pro Klebstoffpunkt aufgetragen werden.

Die Passivierungsgüte, d. h. der Passivierungsgrad von Oberflächen (Kapillaren, Ventilteilen etc.) in Abhängigkeit der verwendeten Säurekonzentration kann abgeleitet werden aus dem Verhalten von CA-Klebstoffpunkten, die auf Oberflächen entsprechender Probekörper aufgetragen werden.

Trägt man CA-Klebstoff beispielsweise auf eine saubere, nicht vorbehandelte Oberfläche z. B. aus Stahl oder Glas auf, so hat der abgesetzte CA-Tropfen kein Bestreben, auseinanderzufließen. Die Form des abgesetzten Tropfens bleibt also mehr oder weniger unverändert, so daß ein im Verhältnis zum Durchmesser hohes Gebilde entsteht. Am Rand des Klebstofftropfens - an der Fließgrenze - zeigt sich, insbesondere auf Glas, eine deutliche Gratbildung. Weiterhin bildet sich um den abgesetzten Klebstofftropfen herum in wenigen Minuten ein Hof milchig weißen Niederschlags, der mit der Zeit an Deutlichkeit zunimmt. Besonders stark ist dieser Niederschlag, der auch als "Blooming" bezeichnet wird, auf Glas. Dieser Niederschlagshof dünnt radial aus und geht auf Stahl- oder anderen Metalloberflächen in eine Zone über, die durch eine konzentrische Verteilung der Spektralfarben ("Korona") gekennzeichnet ist.

Dieses Verhalten kann allgemein beschrieben werden durch:
- Fließverhalten der abgesetzten Klebstofftropfen
- die nach Ende der Fließbewegung vom jeweiligen Klebstofftropfen benetzte Fläche bzw. deren Durchmesser,
- die Erscheinungen an der Fließgrenze und
- die Ausbildung des Blooming-Effekts als Niederschlag um die Klebstofftropfen herum.

Nachfolgend werden Versuchsbeispiele erläutert, welche den positiven Einfluß bei der Anwendung des erfindungsgemäßen Verfahrens verdeutlichen. Das hier gezeigte Beispiel bezieht sich auf Stahl als Auftragsfläche. Ähnliche Effekte sind auch bei anderen Materialien zu beobachten, die bisher keine Anwendung von CA-Klebstoffen erlaubten (beispielsweise Glas). Auch bei Kunststoffen, die ganz unproblematisch mit CA-Klebstoffen verklebbar sind, ergeben sich ähnliche Effekte, insbesondere bezüglich des Ausbreitens des Klebstofftropfens und des Blooming-Effekts.

### Beispiel:

Stahlscheiben (φ 25 mm; Material V2A; Rz 0,8) wurden wie folgt vorbehandelt:

| | | |
|---|---|---|
| Probe 1 | Aceton | 100 % |
| Probe 2 | Aceton/Phosphorsäure | 1/10⁻⁷ |
| Probe 3 | Aceton/Phosphorsäure | 1/10⁻⁶ |
| Probe 4 | Aceton/Phosphorsäure | 1/10⁻⁵ |
| Probe 5 | Aceton/Phosphorsäure | 1/10⁻⁴ |
| Probe 6 | Aceton/Phosphorsäure | 1/10⁻³ |
| Probe 7 | Aceton/Phosphorsäure | 1/10⁻² |

Die Vorbehandlung erfolgte durch Abreiben der Oberflächen mit jeweils einem entsprechend getränkten Vlies.

Auf die Oberflächen der Stahlscheiben wurden mit einem automatischen Dispensersystem jeweils vier CA-Punkte gleichen Volumens aufgetragen (ca. 0,5 µl/Punkt).

Untersucht wurden die nachstehend aufgelisteten Aspekte:
- Fließverhalten der abgesetzten Klebstoffpunkte bzw. tropfen,
- die nach Ende der Fließbewegung vom jeweiligen Klebstofftropfen benetzte Fläche bzw. deren Durchmesser,
- die Fließgrenzen und
- die Ausbildung des Blooming Effekts als milchig weißer kreisrunder Niederschlag um die Klebstofftropfen herum.

Die Beurteilung der Fließeigenschaften erfolgte unmittelbar nach dem Klebstoffauftrag.

| Tabellarische Zusammenfasssung der Ergebnisse | | | | |
|---|---|---|---|---|
| **Probe** | **Fließverhalten** | **benetzter Durchmesser** | **Fließgrenze** | **Blooming** |
| 1 | keine Tendenz, sich auszubreiten | ca. 2,0 mm | deutliche Gratbildung | Breite d.Hofes ca. 1,5 mm Breite d.Korona ca. 2,0 mm |
| | | | | |
| 2 | keine Tendenz, sich auszubreiten | ca. 2,5 mm | deutliche Gratbildung | Breite d.Hofes ca. 1,5 mm Breite d.Korona ca. 1,5 mm |
| | | | | |
| 3 | keine Tendenz, sich auszubreiten | ca. 2,5 mm | deutliche Gratbildung | Breite d.Hofes ca. 1,5 mm Breite d.Korona ca. 1,5 mm |
| | | | | |
| 4 | keine Tendenz, sich auszubreiten | ca. 2,5 mm | geringere Gratbildung gegenüber Proben 1-3 | Breite d.Hofes ca. 1,0 mm Breite d.Korona 0,7mm |
| | | | | |
| 5 | keine Tendenz, sich auszubreiten | ca. 2,5 mm | Gratbildung wie bei Probe 4 | Breite d.Hofes ca. 0,5 mm Breite d.Korona ca. 0,5 mm Korona ist deutlich schärfer nach außen begrenzt wie bei Probe 4 |
| | | | | |
| 6 | keine Tendenz, sich auszubreiten | ca. 2,5 mm | Gratbildung wie bei Probe 4 | Breite d.Hofes ca. 0,3 mm Breite d.Korona ca. 0,3 mm Begrenzung der Korona tritt gegenüber Probe 5 noch schärfer hervor |
| | | | | |
| 7 | deutliche Tendenz, auseinanderzufließen | ca. 4,0 mm | keinerlei Gratbildung | kein Hof keine Korona |

Zum Verarbeiten und zum Auftrag von CA-Klebstoffen eignet sich insbesondere eine Vorrichtung, die vorbestimmte Einzelmengen des CA-Klebstoffs mittels einer Kanüle als Klebstoffpunkte auf eines von zwei aufeinanderzuklebenden Teilen aufträgt. Hierbei ist eine steuerbare Druckerzeugungsquelle zum Beaufschlagen des CA-Klebers mit einem vorbestimmten Druck vorgesehen, ein steuerbares Ventil zwischen dem Klebstoff, der sich in einem Vorratsbehälter befindet, und der Kanüle sowie eine Steuerung, die Steuersignale zum Einstellen des in einer Einzelmenge abzugebenden Klebstoffvolumens mindestens an die Druckerzeugungsquelle und das Ventil liefert. Die Kanüle und/oder das Ventil sind mit dem angesäuerten Lösungsmittel ebenso passiviert wie alle übrigen Teile, die mit dem Klebstoff in Verbindung gelangen können und aufgrund ihres Materials zu Polymerisationsreaktionen führen. Die Steuerung ist hierbei vorzugsweise derart ausgebildet und mit einer Höhenbestimmungseinrichtung verbunden, daß die Höhe des Kanülenendes über der Auftragsfläche in Abhängigkeit vom abzugebenden Klebstoffvolumen eingestellt wird. Zur Verklebung von zwei Teilen, insbesondere zum Einkleben eines Mikrochip-Moduls in eine Kunststoffkarte, ist es von besonderem Vorteil, wenn der Klebstoff an mehreren Punkten aufgetragen wird. Diese haben entsprechend der üblicherweise vorgesehenen Ausfräsung in der Kunststoffkarte bzw. der zur Verfügung stehenden Klebefläche unterschiedliche Volumina.

Vorzugsweise sieht man weiterhin einen mit angesäuertem Lösungsmittel befüllbaren Behälter vor und bildet die Steuerung derartig aus, daß das Kanülenende während einer Arbeitspause in dem angesäuerten Lösungsmittel untergetaucht gehalten wird. Bei Wiederaufnahme der Klebstoffabgabe gibt man nun vorzugsweise eine größere Klebstoffmenge (etwa 2 bis 10 Tropfen) ab und verwirft diese, bevor eine weitere Einzelmenge abgegeben wird.

Nachfolgend werden bevorzugte Ausführungsformen der erfindungsgemäßen Vorrichtung anhand von Abbildungen näher erläutert. Hierbei zeigen
- Fig. 1: eine schematisierte Blockdarstellung eines Dispensersystems,
- Fig. 2: einen Längsschnitt durch eine IC-Karte mit einem einzusetzenden Mikrochip-Modul entlang der Line II-II aus Fig. 3,
- Fig. 3: eine Draufsicht auf die Karte nach Fig. 2 entlang der Linie III-III aus Fig. 2, und
- Fig. 4: eine schematisierte Blockdarstellung einer weiteren Ausführungsform des Dispensersystems.

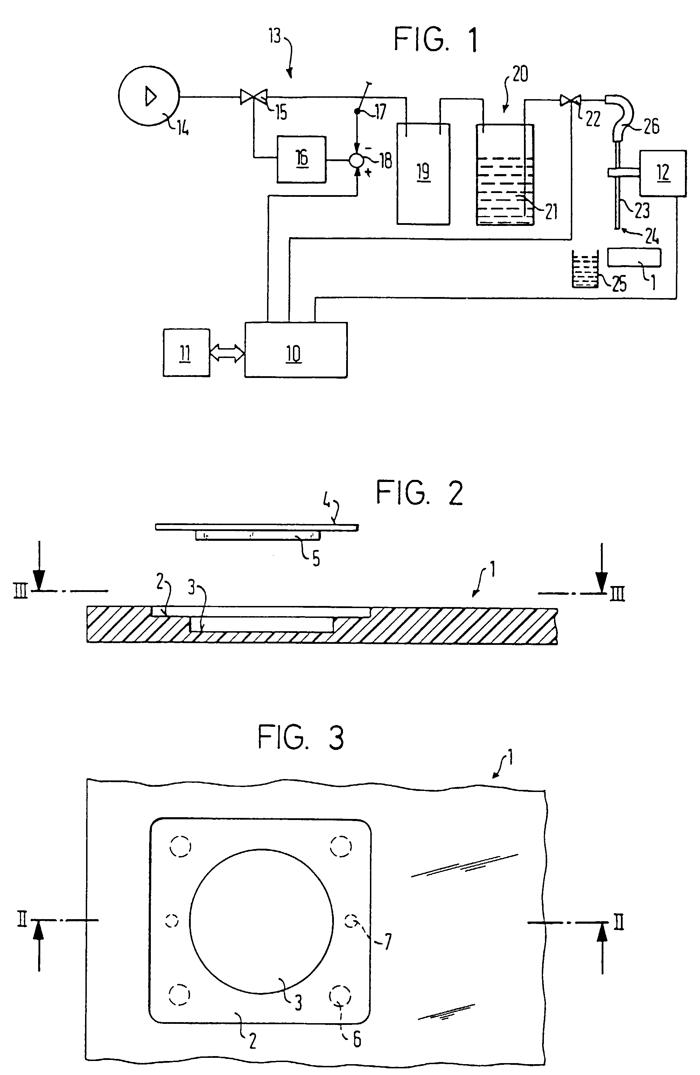

Bei dem in Fig. 1 gezeigten Ausführungsbeispiel der Erfindung liefert eine Pumpe 14 Druckluft, die über ein Ventil 15 einem Lufttrockner 19 zugeführt wird. Der Druck nach dem Ventil 15 wird über einen Druckfühler 17 abgetastet, dessen Ausgangssignal einem Vergleicher 18 zugeführt wird, dessen zweiter Eingang mit einem Ausgang einer Steuerung 10 verbunden ist. Das Vergleichsergebnis wird einem Regler 16 zugeführt, der dann das Ventil 15 derart ansteuert, daß der Druck nach dem Ventil 15 dem Sollwert entspricht, der von der Steuerung 10 vorgegeben wird.

Die Druckluft gelangt nach der Trocknungseinrichtung 19 in einen Klebstoffvorratsbehälter 20, der mit Klebstoff 21 gefüllt ist. Im Klebstoff 21 befindet sich das Einlaßende einer Leitung 26, die über ein Ventil 22 absperrbar und mit dem Einlaßende einer Kanüle 23 verbunden ist. Die Steuerung des Ventils 22 erfolgt ebenfalls über die Steuerung 10.

Die Kanüle 23 ist im Manipulator-Arm einer Positionierungseinrichtung 12 angebracht, die über Steuersignale aus der Steuerung 10 steuerbar ist. Durch diese Positionierungseinrichtung 12 kann die Kanüle 23 bzw. ihr Ende 24 and vorprogrammierten Stellen auf einem Substrat 1 positioniert werden. Die Programmierung geschieht hierbei über eine Eingabevorrichtung 11, die mit der Steuerung 10 verbunden ist. Die Steuerung 10 umfaßt einen Computer.

Weiterhin ist ein Lösungsmittelbehälter 25 vorgesehen, in dem sich ein Lösungsmittel befindet, das durch geringe Mengen Phosphorsäure angesäuert ist. Bei einer besonders bevorzugten Ausführungsform der Erfindung handelt es sich bei dem Lösungsmittel um Aceton oder auch ein nicht-flüchtiges Lösungsmittel (CEM), das durch geringe Mengen Phosphorsäure angesäuert ist. Dadurch wird gewährleistet, daß die aus Stahl gefertigte (und durch dasselbe Lösungsmittel vorbehandelte) Kanüle nicht mit dem CA-Klebstoff reagiert und eine praktisch unbegrenzte Standfestigkeit erhält. Zusätzlich kann bei dem erfindungsgemäßen Dispensersystem eine in der Zeichnung nicht dargestellter Leerbehälter zur Aufnahme von verworfenem Klebstofff vorgesehen werden.

Zum besseren Verständnis der nachfolgenden Erläuterung des Einklebevorgangs werden die (an sich bekannten) miteinander zu verklebenden Gegenstände anhand der Figuren 2 und 3 beschrieben.

Bei einer IC-Karte ist im Substrat 1 aus Kunststoffmaterial mit einer sehr geringen Dicke (unter 1 mm) eine zweistufige Ausnehmung vorgesehen. Diese umfaßt eine äußere Ausnehmung 2 und eine innere Ausnehmung 3. Die äußere Ausnehmung 2 ist in ihrer Kontur und Tiefe so ausgebildet, daß sie die Kontaktfläche 4 eines Mikrochip-Moduls im wesentlichen bündig aufnehmen kann. Die innere Ausnehmung 3 ist so dimensioniert, daß der auf der Kontaktfläche 4 montierte Chip 5 frei sitzt, so daß bei einem Verbiegen der Gesamtanordnung der Chip 5 kräftefrei bleibt.

Die Verklebung erfolgt über den Auftrag von Kleberpunkten 6,7, wobei diese jeweils eine bestimmte, sehr geringe Menge von Klebstoff umfassen. Die Stellen und auch die Klebstoffmengen werden mittels der Eingabeeinrichtung 11 in der Steuerung 10 vorprogrammiert, so daß nach einer erstmaligen, meist über optische Hilfsmittel erfolgenden Einjustierung nachfolgende Klebevorgänge programmgesteuert erfolgen können.

Bei den in Fig. 3 als Beispiel gezeigten Klebestellen handelt es sich um vier größere, in den Ecken des Mikrochip-Moduls zu liegen kommende Klebestellen 6 und um zwei kleinere, an den Schmalseiten des Mikrochip-Moduls liegende Klebestellen 7. Die Volumina sind hierbei so bemessen, daß beim Aufdrücken eines Mikrochip-Moduls auf die aufgesetzten Kleberpunkte der Klebstoff im wesentlichen über die gesamte Fläche der äußeren Ausnehmung 2 verteilt ("plattgedrückt") wird, nicht aber in die innere Ausnehmung 3 und auch nicht in den Spalt zwischen dem Außenrand der Kontaktfläche 4 und dem Innenrand der inneen Ausnehmung 2 gelangt.

Dadurch ist sichergestellt, daß keine Verklebung oder chemische Reaktion zwischen dem Chip 5 und dem Substrat 1 erzielt wird, mit der Folge, daß bei einem Verbiegen der IC-Karte keine Kräfte auf den Chip 5 wirken. Weiterhin wird erreicht, daß keine chemischen Reaktionen zwischen im Übermaß vorhandenem Klebstoff und dem Substrat 1 oder der Kontaktfläche 4 auftreten können, die eine optisch und mechanisch unerwünschte Folge hätten. Die Bestimmung der Klebstoff-Menge ist also sehr entscheidend. Diese wird dadurch eingestellt, daß der Druck des Klebstoffs (über den Regelkreis 15-18), die Klebstoff-Zufuhrzeit (über das Ventil 22) und die Höhe (den Abstand) des Kanülenendes 24 über dem Substrat 1 reguliert wird. Diese Höhenbestimmung kann entweder durch Messung oder aber durch Kalibrieren der Positionierungseinrichtung 12 mit daran montierter Kanüle 23 an einer feststehenden Anschlagfläche mit bekannter Höhe relativ zum Substrat 1 geschehen. Aus Obigem geht hervor, daß ein wesentlicher Punkt bei dieser Ausführungsform der erfindungsgemäßen Vorrichtung darin liegt, daß neben dem Druck und der Zeitdauer, mit dem bzw. während derer CA-Klebstoff abgegeben wird, auch die Höhe des Kanülenendes über der Auftragsfläche mit in die Einstellung der Klebstoffmenge einfließt. Dann, wenn eine sehr geringe Klebstoffmenge abgegeben werden soll, führt man das Kanülenende sehr nahe an die Auftragsfläche heran. Wenn nun der Klebstoff beginnt, über das Kanülenende (bzw. dessen Querschnitt) hervorzutreten, findet sehr schnell ein Kontakt zur Auftragsfläche statt.

Aufgrund der niedrigen Viskosität des CA-Klebstoffs und der vorbereiteten Oberflächeneigenschaften der Auftragsfläche verteilt sich der Klebstoff sehr schnell über einen gewissen Oberflächenbereich der Auftragsfläche, so daß bei einem Stoppen der Klebstoffzufuhr bereits eine definierte Klebstoff-menge auf der Oberfläche haftet. Dann, wenn eine größere Klebstoffmenge abgegeben wer-den soll, wird ein größerer Abstand des Kanülenendes über der Auftragsfläche gewählt.

Während bisher das Verkleben derart erfolgte, daß die abzugebende Einzelmenge von Klebstoff fest eingestellt wurde, kann bei der hier gezeigten Ausführungsform die Steuerung derart ausgebildet sein, daß der Klebstoff an mehreren Punkten in unterschiedlichen Volumina aufgetragen wird (Punkte 6 und 7). Auf diese Weise kann man die Verklebung nicht nur an großen Einzelflächen vornehmen, sondern auch an Stellen, an denen die genannten größeren Einzelflächen über schmalere Brücken verbunden sind. Dadurch kann die Haltbarkeit der Verklebung erhöht werden.

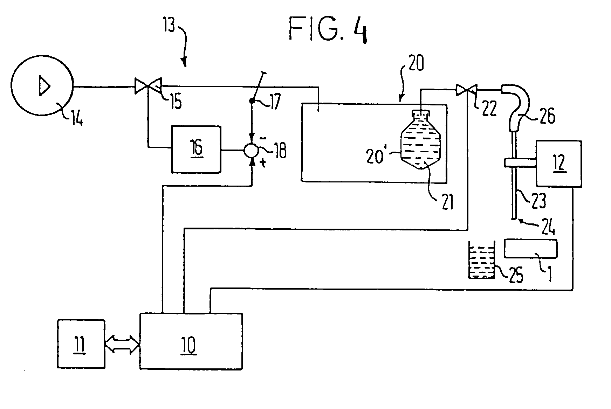

Die in Fig. 4 gezeigte weitere Ausführungsform der Erfindung unterscheidet sich von der nach Fig. 1 dadurch, daß der Klebstoff 21 nicht direkt mit Luft aus der Druckluftquelle 13 beaufschlagt wird, vielmehr befindet sich der Klebstoff 21 in einem Sekundär-Klebstoffvorratsbehälter 20', der elastisch ausgebildet ist (ähnlich einem Beutel für Infusionsflüssigkeit). Die Druckluft wird in den (dichten) Klebstoffvorratsbehälter 20 eingeführt, so daß der Luftdruck den Sekundär-Klebstoffvorratsbehälter 20' zusammendrückt und den Klebstoff 21 dem Ventil 22 zuführt. Dadurch ist nicht nur ein besonders sauberes Arbeiten insbesondere beim Nachfüllen von Klebstoff möglich (der Klebstoff kann sozusagen als "Patrone" eingesetzt werden), vielmehr bringt diese Vorgehensweise noch einen weiteren Vorteil mit sich. Dann nämlich, wenn der Klebstoff 21 mit Gas beaufschlagt wird, kommt es zu einem Lösen gewisser Gasmengen im Klebstoff 21. Je länger der Druck auf den Klebstoff 21 wirkt bzw. je höher der herrschende Druck ist, desto größer ist die im Klebstoff gelöste Gasmenge. Wenn nun der Klebstoff nicht mehr unter Druck steht, so sinkt die im Klebstoff lösbare Maximalmenge von Gas, so daß das Gas in Form von Blasen aus dem Klebstoff austreten kann. Eine solche Blasenbildung kann bereits im Bereich des Dosierventils 22, der Kanüle 23 oder der Schlauchleitung 26 erfolgen, was natürlich die Dosierung stört. Besonders kritisch ist das Ausperlen von im Klebstoff gelöstem Gas, wenn die Blasen sich am Kanülenende 24 bilden. Diese Problematik wird durch den Sekundär-Klebstoffvorratsbehälter 20' vollends vermieden.

### Bezugszeichenliste

- 1: Substrat
- 2: äußere Ausnehmung
- 3: innere Ausnehmung
- 4: Kontaktfläche
- 5: Chip
- 6: großer Klebstoffpunkt
- 7: kleiner Klebstoffpunkt
- 10: Steuerung
- 11: Eingabeeinrichtung
- 12: Positionierungseinrichtung
- 13: Druckluftquelle
- 14: Pumpe
- 15: Luftventil
- 16: Regler
- 17: Druckfühler
- 18: Vergleicher
- 19: Trockner
- 20: Klebstoffvorratsbehälter
- 20': Sekundär-Klebstoffvorratsbehälter
- 21: Klebstoff
- 22: Dosierventil
- 23: Kanüle
- 24: Kanülenende
- 25: Lösungsmsittelbehälter
- 26: (Schlauch-)Leitung

## Patentansprüche

1. Verfahren zum Verarbeiten und Auftragen von Cyanacrylat-Klebstoffen (CA-Klebstoffen), insbesondere zur Behandlung des CA-Klebstoffs bei der Applikation auf zu verklebenden Flächen, wobei der Klebstoff mittels einer aus Stahl gefertigten Kanüle aufgetragen wird, die, bevor sie mit dem Klebstoff zum ersten Mal in Berührung gebracht wird, in einem angesäuerten Lösungsmittel passiviert wird.

2. Verfahren nach Anspruch 2,
dadurch gekennzeichnet,
daß die Kanüle mindestens mit ihrem spitzennahen Ende während einer Arbeitspause im angesäuerten Lösungsmittel aufbewahrt wird, wobei vorzugsweise die Intervalle zwischen den Arbeitspausen, d.h. die Arbeitszeiten derart eingestellt werden, daß die Kanüle während der Arbeitszeit im wesentlichen feucht durch das angesäuerte Lösungsmittel bleibt.

3. Verfahren nach einem der vorhergehenden Ansprüche,
dadurch gekennzeichnet,
daß die Passivierung durch Einlegen in das angesäuerte Lösungsmittel und/oder Durchspülen mit dem angesäuerten Lösungsmittel und/oder Abwischen mit dem angesäuerten Lösungsmittel durchgeführt wird.

4. Verfahren nach einem der vorhergehenden Ansprüche,
dadurch gekennzeichnet,
daß das Lösungsmittel eine Säure in einem Mengenverhältnis von ca. 1/10⁻⁷ bis 1/10⁻¹, vorzugsweise 1/10⁻³ bis 1/10⁻¹ enthält.

5. Verfahren nach einem der vorhergehenden Ansprüche,
dadurch gekennzeichnet,
daß das Lösungsmittel Aceton, Ethylcyanacetat oder Spiritus ist.

6. Verfahren nach einem der vorhergehenden Ansprüche,
dadurch gekennzeichnet,
daß das Lösungsmittel mit Phosphorsäure angesäuert wird.

7. Verfahren nach einem der vorhergehenden Ansprüche,
dadurch gekennzeichnet,
daß zur Herstellung von IC-Karten ein Mikrochip-Modul in eine Kunststoffkarte eingeklebt wird.

8. Verfahren nach Anspruch 9,
dadurch gekennzeichnet,
daß die Kunststoffkarte und/oder der Mikrochip-Modul mit Ausnahme der Klebeflächen selbst vor dem Aufbringen des CA-Klebstoffs mit dem angesäuerten Lösungsmittel passiviert und/oder gereinigt werden.

9. Verfahren nach einem der vorhergehenden Ansprüche,
dadurch gekennzeichnet,
daß bei der Verwendung von Glas oder anderen Materialien bei denen Schockaushärtung auftreten kann, als Substrat für eine zu verklebende Fläche das Material leicht sauer vorbehandelt wird, um Schockaushärtungen zu vermeiden.

10. Verfahren nach einem der Ansprüche 9 bis 11,
dadurch gekennzeichnet,
daß vorbestimmte Einzelmengen des CA-Klebstoffs mittels einer Kanüle als Klebstofftropfen oder -strang auf die Kunststoffkarte oder den Mikrochip-Modul aufgetragen werden und der Mikrochip-Modul auf den Klebstoff aufgesetzt wird.

11. Verfahren nach Anspruch 10 oder 11,
dadurch gekennzeichnet,
daß bei geringen Einzelmengen das Volumen des abzugebenden CA-Klebstoffs über eine Einstellung des Drucks und der Zeitdauer, mit welcher der Kanüle Klebstoff zugeführt wird, und der Höhe des Kanülenendes über der Auftragsfläche bestimmt wird.

12. Vorrichtung zum Verarbeiten und zum Auftragen von CA-Klebstoffen, wobei ein erstes Teil (4,5) auf ein zweites Teil (1) geklebt wird, wobei vorbestimmte Einzelmengen des CA-Klebstoffs (21) mittels einer Kanüle (23) als Klebstoffpunkte (6,7) auf das erste oder das zweite Teil (1;6,7) aufgetragen werden und das erste Teil (4,5) auf die Klebstoffpunkte (6,7) aufgesetzt wird, mit einer steuerbaren Druckerzeugungsquelle (13) zum Beaufschlagen des CA-Klebstoffs (21) mit einem vorbestimmten Druck, mit einem steuerbaren Ventil (22) zwischen dem CA-Klebstoff (21) in einem Vorratsbehälter (20) und der Kanüle (23) und mit einer Steuerung (10), die Steuersignale zum Einstellen des in einer Einzelmenge abzugebenden Klebstoffvolumens mindestens an die Druckerzeugungsquelle (13) und das Ventil (22) liefert, wobei die mit dem CA-Klebstoff (21) in Berührung kommenden Teile (1,4,5,22,23) in einem angesäuerten Lösungsmittel passiviert sind, bevor sie mit dem CA-Klebstoff (21) zum ersten Mal in Berührung gebracht werden.

13. Vorrichtung nach Anspruch 14,
dadurch gekennzeichnet,
daß die Steuerung (10) derart ausgebildet und mit einer Höhenbestimmungseinrichtung verbunden ist, daß die Höhe des Kanülenendes (24) über der Auftragsfläche in Abhängigkeit vom abzugebenden Klebstoffvolumen eingestellt wird.

14. Vorrichtung nach einem der Ansprüche 14 oder 15,
dadurch gekennzeichnet,
daß die Steuerung (10) derart ausgebildet ist, daß der Klebstoff an mehreren Punkten (6,7) in unterschiedlichen Volumina aufgetragen wird.

15. Vorrichtung nach Anspruch 15,
dadurch gekennzeichnet,
daß ein mit angesäuertem Lösungsmittel befüllbarer Behälter (25) vorgesehen und die Steuerung (10) derart ausgebildet ist, daß das Kanülenende (24) während einer Arbeitspause in angesäuertem Lösungsmittel untergetaucht gehalten wird und bei Wiederaufnahme von Klebstoffabgabe zunächst eine größere Klebstoffmenge, vorzugsweise 2 bis 10 Tropfen abgegeben und verworfen werden, bevor eine erste weitere Einzelmenge abgegeben wird.

16. Vorrichtung nach einem der Ansprüche 14 bis 17,
dadurch gekennzeichnet,
daß zum Beaufschlagen von CA-Klebstoff (21) mit einem vorbestimmten Druck der Vorratsbehälter (20') für den CA-Klebstoff (21) mindestens eine verschiebbare oder elastische Seitenwand aufweist, so daß bei Beaufschlagung des Vorratsbehälters (20') mit einem hydrostatischen Druck dieser Druck über die verschiebbare oder elastische Wand auf den CA-Klebstoff (21) wirkt.

## Claims

1. A method of processing and applying cyanacrylate adhesives (CA adhesives), in particular for the treatment of the CA adhesive during application on surfaces to be stuck, wherein the adhesive is applied by means of a cannula which is produced from steel and which, before it is brought into contact with the adhesive for the first time, is passivated in an acidified solvent.

2. A method according to Claim 2 *[sic],* **characterized in that** the cannula is held at least at the end thereof close to the tip in the acidified solvent during a pause in operation, wherein the intervals between the pauses in operation, *i.e.* the operating times, are preferably set in such a way that the cannula stays substantially wet from the acidified solvent during the operating time.

3. A method according to one of the preceding Claims, **characterized in that** the passivation is carried out by insertion into the acidified solvent and/or by flushing with the acidified solvent and/or by wiping with the acidified solvent.

4. A method according to one of the preceding Claims, **characterized in that** the solvent contains an acid in a quantity ratio of approximately from 1/10⁻⁷ to 1/10⁻¹, preferably 1/10⁻³ to 1/10⁻¹.

5. A method according to one of the preceding Claims, **characterized in that** the solvent is acetone, ethyl cyanacetate or spirit.

6. A method according to one of the preceding Claims, **characterized in that** the solvent is acidified with phosphoric acid.

7. A method according to one of the preceding Claims, **characterized in that** a microchip module is glued into a plastics board in order to produce IC boards.

8. A method according to Claim 9 *[sic],* **characterized in that** except for the adhesion surfaces themselves the plastics board and/or the microchip module is passivated and/or cleaned with the acidified solvent before the application of the CA adhesive.

9. A method according to one of the preceding Claims, **characterized in that** when glass or other materials in which shock hardening can occur are used as the substrate for a surface to be stuck the material is pre-treated in a slightly acid manner in order to prevent shock hardening.

10. A method according to one of Claims 9 to 11 *[sic],* **characterized in that** pre-determined individual quantities of the CA adhesive are applied as a drop or string of adhesive to the plastics board or the microchip module by means of a cannula, and the microchip module is placed on the adhesive.

11. A method according to Claim 10 or 11 *[sic],* **characterized in that** with small individual quantities the volume of the CA adhesive to be discharged is determined by setting the pressure and the duration - over which adhesive is supplied to the cannula - and the height of the end of the cannula above the application surface.

12. A device for processing and for applying CA adhesives, a first part (4, 5) being stuck onto a second part (1), and pre-determined individual quantities of the CA adhesive (21) being applied as points (6, 7) of adhesive to the first or the second part (1; 6, 7) *[sic]* by means of a cannula (23) and the first part (4, 5) being placed on the points (6, 7) of adhesive, with a controllable pressure-generating source (13) for acting upon the CA adhesive (21) with a pre-determined pressure, with a controllable valve (22) between the CA adhesive (21) in a storage container (20) and the cannula (23) and with a control means (10) which delivers control signals for setting the volume of adhesive to be discharged in an individual quantity at least to the pressure-generating source (13) and the valve (22), wherein the parts (1, 4, 5, 22, 23) which come into contact with the CA adhesive (21) are passivated in an acidified solvent before they are brought into contact with the CA adhesive (21) for the first time.

13. A device according to Claim 14 *[sic],* **characterized in that** the control means (10) is constructed and is connected to a height-determining device in such a way that the height of the end (24) of the cannula above the application surface is set as a function of the volume of adhesive to be discharged.

14. A device according to one of Claims 14 or 15 *[sic],* **characterized in that** the control means (10) is constructed in such a way that the adhesive is applied in different volumes at a plurality of points (6, 7).

15. A device according to Claim 15 *[sic],* **characterized in that** a container (25) which can be filled with acidified solvent is provided and the control means (10) is constructed in such a way that the end (24) of the cannula is held submerged in the acidified solvent during a pause in operation, and when the discharge of adhesive is resumed a larger quantity of adhesive, preferably from 2 to 10 drops, is first discharged and discarded before a first further individual quantity is discharged.

16. A device according to one of Claims 14 to 17 *[sic],* **characterized in that**, in order to act upon CA adhesive (21) with a pre-determined pressure, the storage container (20') for the CA adhesive (21) has at least one displaceable or resilient lateral wall, so that when the storage container (20') is acted upon with a hydrostatic pressure the said pressure acts upon the CA adhesive (21) by way of the displaceable or resilient wall.

## Revendications

1. Procédé pour le traitement et l'application d'adhésifs cyanoacryliques (adhésifs-CA), en particulier pour la manipulation d'adhésifs-CA lors de leur application sur des surfaces à coller, par lequel l'adhésif est apporté au moyen d'une canule réalisée en acier qui est rendue passive dans un solvant acidifié avant qu'elle ne soit mise pour la première fois en contact avec l'adhésif.

2. Procédé selon la revendication 1, caractérisé en ce que la canule est maintenue pendant les pauses de travail dans un solvant acidifié au moins en son extrémité presque en pointe, procédé dans lequel avantageusement les intervalles entre les pauses de travail, c'est-à-dire les temps de travail, sont établis de telle sorte que la canule reste sensiblement en l'état humidifié par le solvant acidifié pendant le temps de travail.

3. Procédé selon l'une des revendications précédentes, caractérisé en ce que la passivation est accomplie par plongée dans le solvant acidifié et/ou pulvérisation avec du solvant acidifié et/ou essuyage avec du solvant acidifié.

4. Procédé selon l'une des revendications précédentes, caractérisé en ce que le solvant contient un acide en une quantité d'environ de 1/10⁻⁷ jusqu'à 1/10⁻¹, avantageusement entre 1/10⁻³ jusqu'à 1/10⁻¹.

5. Procédé selon l'une des revendications précédentes, caractérisé en ce que le solvant est un acétone, un éthyle cyanoacétate ou un alcool.

6. Procédé selon l'une des revendications précédentes, caractérisé en ce que le solvant est acidifié avec un acide phosphorique.

7. Procédé selon l'une des revendications précédentes, caractérisé en ce qu'un module de microcomposants est collé dans une carte de plastique pour la réalisation d'une carte à circuits intégrés.

8. Procédé selon la revendication 7, caractérisé en ce que la carte de plastique et/ou le module de microcomposants sont, à l'exception des surfaces à coller, eux-mêmes passivés et/ou nettoyés avec le solvant acidifié avant l'apport de l'adhésif-CA.

9. Procédé selon l'une des revendications précédentes, caractérisé en ce que lors de l'utilisation, en tant que substrat pour une surface à encoller, de verre ou autre matériau dans lequel peut intervenir un choc lors du durcissement, ce matériau est légèrement traité auparavant par l'acide pour éviter ce choc dû au durcissement.

10. Procédé selon l'une des revendications 7 à 9, caractérisé en ce que des quantités prédéterminées d'adhésif-CA sont apportées au moyen d'une canule sous la forme de gouttes d'adhésif ou de lignes d'adhésif sur la carte de plastique ou sur le module de microcomposants et en ce que le module de microcomposants est placé sur l'adhésif.

11. Procédé selon la revendication 8 ou 9, caractérisé en ce que, pour de petites quantités, le volume d'adhésif-CA à apporter est déterminé par le réglage de la pression et de la durée avec laquelle l'adhésif est conduit dans la canule et par la hauteur de l'extrémité de la canule au dessus de la surface d'application.

12. Dispositif pour le traitement et l'application d'adhésifs-CA avec lequel une première pièce (4,5) est collée sur une deuxième pièce (1) et une quantité prédéterminée d'adhésif-CA (21) est appliquée au moyen d'une canule (23) sous la forme de points d'adhésif (6,7) sur la première ou la deuxième pièce (1;6,7) et cette première pièce (4,5) est posée sur les points d'adhésif (6,7), dispositif comprenant une source générant de la pression (13) susceptible d'être pilotée pour appliquer une pression prédéterminée à l'adhésif-CA (21), un clapet (22) susceptible d'être piloté et agencé entre l'adhésif-CA (21) au sein d'un récipient de stockage (20) et la canule (23), ainsi qu'un dispositif de pilotage (10) délivrant des signaux de pilotage au moins à la source générant une pression (13) et au clapet (22) pour établir le volume d'adhésif correspondant à la quantité individuelle, dispositif dans lequel les pièces (1,4,5,22,23) venant en contact avec l'adhésif-CA (21) sont passivées dans un solvant acidifié avant qu'elles ne soient mises pour la première fois en contact avec l'adhésif-CA (21).

13. Dispositif selon la revendication 12, caractérisé en ce que le dispositif de pilotage (10) est relié à un dispositif de détermination de la hauteur, et est construit de telle sorte que la hauteur de l'extrémité de la canule (24) au dessus de la surface d'application est établie en fonction du volume d'adhésif à distribuer.

14. Dispositif selon la revendication 12 ou 13, caractérisé en ce que le dispositif de pilotage (10) est conçu de telle sorte que l'adhésif est appliqué en une pluralité de points (6,7) de volumes différents.

15. Dispositif selon la revendication 13, caractérisé en ce qu'il est prévu un récipient (25) susceptible d'être rempli d'un solvant acidifié, et en ce que le dispositif de pilotage (10) est conçu de telle sorte que l'extrémité (24) de la canule est maintenue durant une pause de travail plongée dans le solvant acidifié et que lors d'une reprise de distribution d'adhésif, on distribue et jette une plus grande quantité d'adhésif, avantageusement 2 à 10 gouttes, avant qu'une première quantité d'adhésif soit distribuée.

16. Dispositif selon l'une des revendications 12 à 15, caractérisé en ce que, pour application d'une pression prédéterminée sur l'adhésif-CA (21), le récipient de stockage (20') pour l'adhésif-CA (21) présente au moins une paroi latérale élastique ou mobile en translation de telle sorte que lors de l'application d'une pression hydrostatique sur le récipient de stockage (20'), cette pression agit au travers de cette paroi élastique ou mobile sur l'adhésif-CA (21).
